# EUROPÄISCHE PATENTSCHRIFT

(11) **EP 0 442 095 B1**
(45) Veröffentlichungstag und Bekanntmachung des Hinweises auf die Patenterteilung: **06.04.1994**
(21) Anmeldenummer: 90124406.1
(22) Anmeldetag: 17.12.1990
(51) Int. Cl.: F21Q 1/00, B60Q 1/26

(54) **Heckleuchte für Fahrzeuge**
Rearlight for vehicles
Feu arrière de véhicule

(30) Priorität: 13.02.1990 DE 9001659 U
(43) Veröffentlichungstag der Anmeldung: 21.08.1991
(73) Patentinhaber: Hella KG Hueck & Co., 59552 Lippstadt (DE)
(72) Erfinder: Hunold, Franz-Josef, W-4780 Lippstadt (DE); Dreger, Michael, W-4780 Lippstadt (DE); Schäfer, Heinrich, W-4787 Geseke (DE)

(56) Entgegenhaltungen:
- DE-A- 3 305 218
- FR-A- 2 597 191
- FR-A- 2 597 192
- US-A- 4 855 877

## Beschreibung

Die Erfindung betrifft eine Heckleuchte für Fahrzeuge gemäß dem Oberbegriff des Patentanspruchs 1.

Derartige Heckleuchten sind Stand der Technik (siehe z. B. der als Geschmacksmuster MR 437 (eingetragen beim Amtsgericht Lippstadt) hinterlegten Heckleuchte für den Golf II). Es wird angestrebt, die bekannte Heckleuchte hinsichtlich ihrer Formgebung zu optimieren. Dabei sind jedoch verschiedene technische, insbesondere lichttechnische Randkriterien zu beachten. So z. B. die maximale und minimale Lichtstärke, eine bestimmte Lichtverteilung, Größe und Plazierung der Signalfelder der einzelnen Signale wie Blinklicht, Bremslicht, Schlußlicht, Nebelschlußlicht, Rückfahrlicht und Rückstrahler. Außerdem sollen sich die Heckleuchten in ihrer Außenkontur an die Kontur der Fahrzeugkarosserie, insbesondere im Übergang von der Heckseite der Karosserie zur Seitenfläche der Karosserie anpassen.

Aufgabe der Erfindung ist es, eine Heckleuchte zu schaffen mit möglichst großen und bis in die Seitenbereiche der Fahrzeugkarosserie hineinreichenden Signalflächen, wobei gleichfarbige Lichtscheibenabschnitte die gleiche Strukturierung und Brillanz aufweisen. Insbesondere soll gegenüber der bekannten Leuchte das Rückfahrlicht durch Verbreiterung des Reflektors in seiner Wirkung verbessert werden, ohne daß der entsprechende Lichtscheibenabschnitt sich farblich zu stark von den benachbarten Lichtscheibenabschnitten abhebt. Diese Aufgabe wird gelöst durch das Zusammenwirken der im Hauptanspruch angegebenen Merkmale.

Bei einer Weiterbildung der Erfindung ist die Lichtscheibe so ausgebildet, daß der Lichtscheibenabschnitt für das Blinklicht nach oben hin um einen spitzen Winkel zurückspringend verläuft. Dadurch ist es möglich, die Außenkontur der Leuchte an die Außenkontur der Karosserie anzupassen, ohne daß die Lichtscheibenabschnitte, die mit einem Rückstrahler versehen sind, schräggestellt und/oder nicht in einer Ebene verlaufend ausgebildet werden müssen. Der möglichst planflächige Verlauf des heckseitigen Teils der Lichtscheibe bringt auch für den Lichtscheibenabschnitt für das Rückfahrlicht einen Vorteil. Damit ist es leicht möglich, die lichtundurchlässigen Streifen im Lichtscheibenabschnitt für das Rückfahrlicht aufzukleben oder im Prägeverfahren durch Druck und/oder Wärme aufzusiegeln.

Um das Befestigen der Lichtscheibe auf dem Leuchtengehäuse, z. B. durch Schweißen, zu vereinfachen, ist es vorteilhaft, den Lichtscheibenabschnitt für das Blinklicht als ein separates Teil auszubilden, wobei die übrigen Lichtscheibenabschnitte zu einem einzigen Teil im Spritzverfahren zusammengefügt sind, und weiterhin zwischen diesen beiden Lichtscheibenteilen einen Steg anzuordnen, der an das von den Reflektoren gebildete Gehäuse angeformt ist. Damit ist es möglich, das Schweißwerkzeug aus unterschiedlichen Richtungen auf die Schweißstelle aufzubringen, wodurch nicht nur eine einfachere, sondern auch eine sicherere Schweißung der Lichtscheibe mit dem Gehäuse erreicht wird.

Weiterhin ist es zweckmäßig, zumindest den Bereichen der Lichtscheibenabschnitte, die von dem von den Reflektoren reflektierten Licht beaufschlagt werden und mit Rückstrahlertripeln besetzt sind, eine Optikscheibe vorzuschalten, welche mit zeilenförmig angeordneten, aneinandergrenzenden Zylinderlinsen besetzt sind. Damit wird erreicht, daß das gesamte von den Reflektoren gerichtete Licht diese Lichtscheibenabschnitte im Bereich ihrer Lichtdurchlässe durchstrahlt. Es ist zweckmäßig, die Optikscheibe so auf das von den Reflektoren gebildete Gehäuse aufzusetzen, daß ihre Außenfläche stufenlos in die Außenfläche des zurückspringenden Randes des von den Reflektoren gebildeten Gehäuses übergeht. Eine Stufe zwischen diesen Bauteilen würde von außen als dunkler Streifen erscheinen. Um den beiden hier aneinandergrenzenden Flächen, nämlich die Außenfläche des zurückspringenden Randes und die Außenfläche der Optikscheibe, eine etwa gleiche Oberflächenbrillanz zu geben, ist es nach einem weiteren Merkmal der Erfindung vorteilhaft, die Außenfläche des zurückspringenden Randes mit Rippen oder Rinnen zu versehen, die das hierauf auftreffende Licht gestreut reflektieren.

Im folgenden wird die erfindungsgemäße Heckleuchte im einzelnen anhand der Zeichnung erläutert.

Es zeigen:

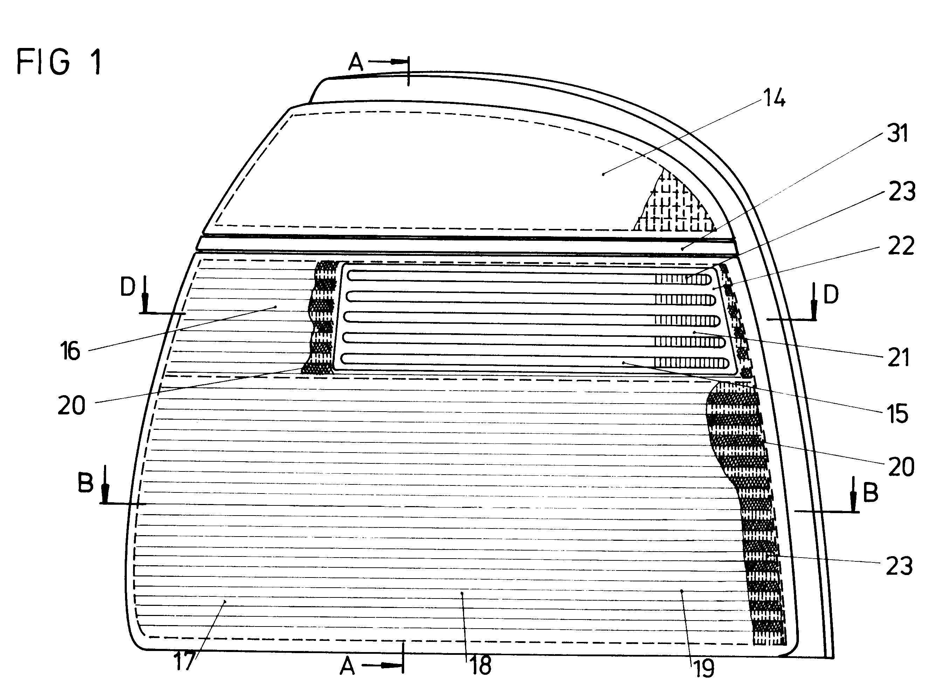

Figur 1 eine Ansicht auf die Heckleuchte in Fahrtrichtung auf das Fahrzeugheck gesehen,

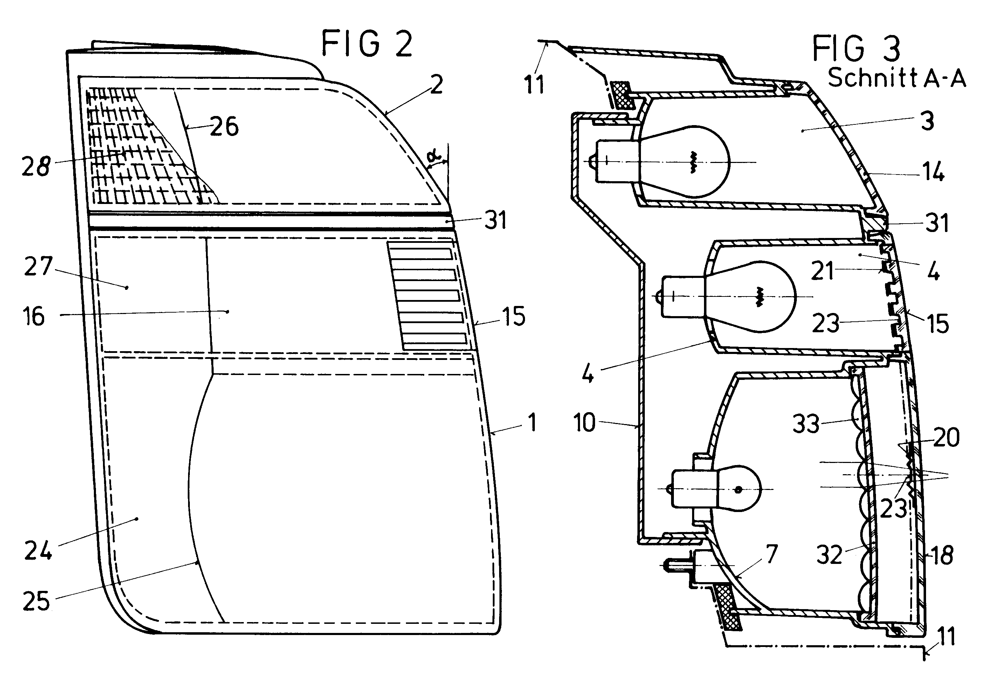

Figur 2 eine Ansicht auf die Heckleuchte senkrecht auf die Fahrzeugseitenfläche gesehen,
Figur 3 einen Schnitt durch die Heckleuchte nach der Schnittlinie A-A,

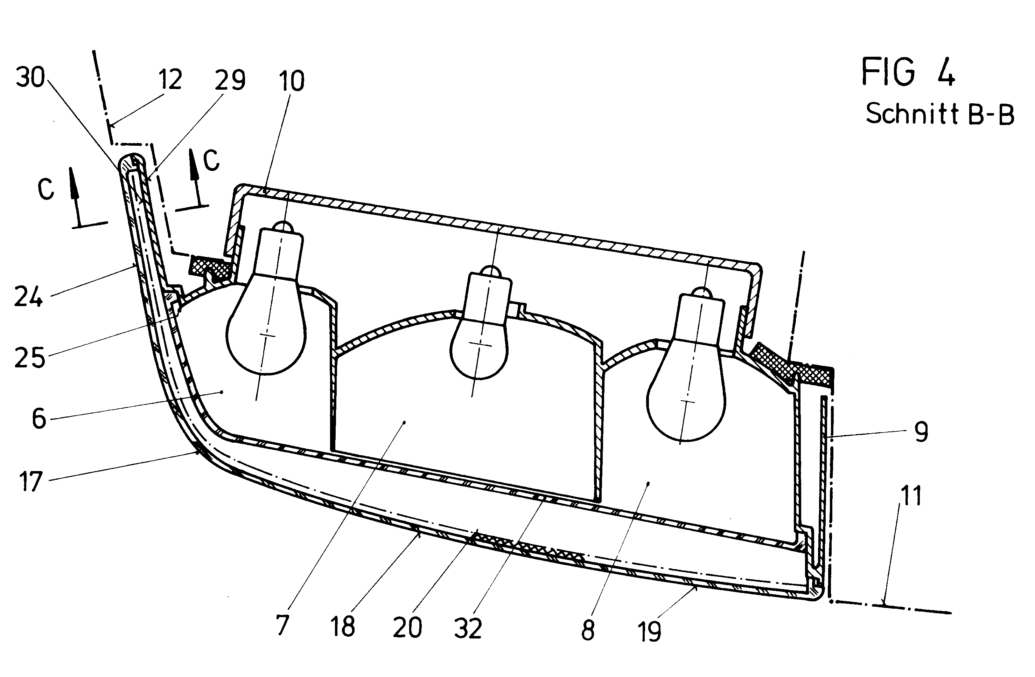

Figur 4 einen Schnitt nach der Linie B-B,

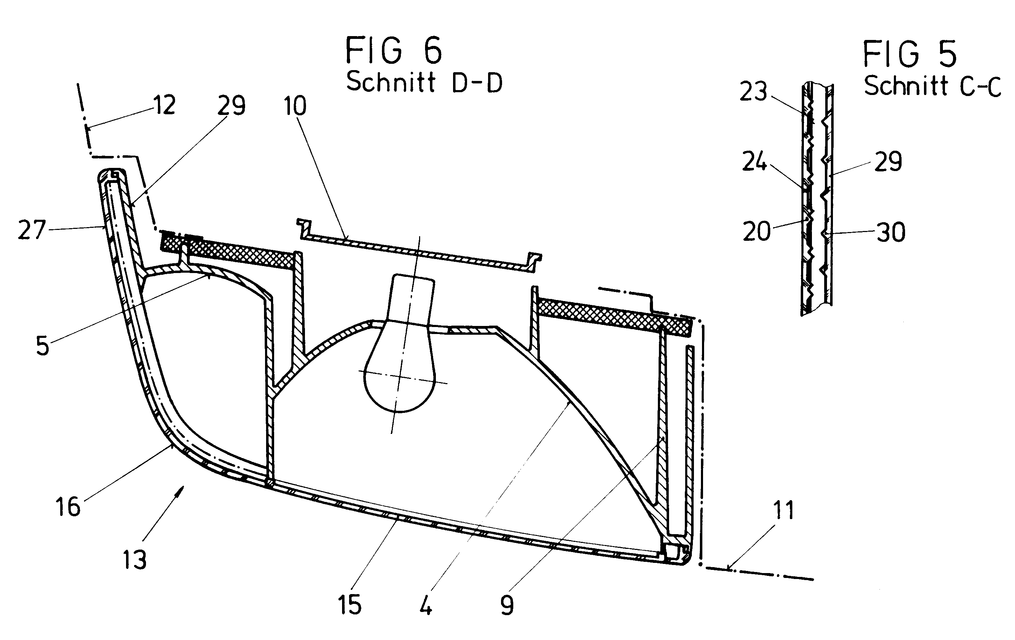

Figur 5 einen Schnitt nach der Linie C-C und
Figur 6 einen Schnitt nach der Linie D-D.

Die aus den Lichtscheibenteilen (1 und 2) zusammengesetzte Lichtscheibe ist auf das von den Reflektoren (3, 4, 5, 6, 7 und 8) gebildete Gehäuse (9) aufgesetzt und mit diesem verschweißt. Von der Rückseite her ist ein Lampenträger (10) in das Gehäuse eingesetzt, welcher die Glühlampen samt ihrer Kontaktierung trägt.

Die Heckleuchte ist so ausgebildet, daß sie in eine Karosserieöffnung einsetzbar ist, welche sich im Übergang von der Fahrzeugheckfläche (11) zur Fahrzeugseitenfläche (12) befindet. Dabei ist die Oberfläche der Lichtscheibe (1, 2) so ausgebildet und so plaziert, daß sie in ihren Umfangsbereichen mit dem Rand der Karosserieöffnung nahezu bündig abschließt. Damit ergibt sich eine Leuchte, von der von außen lediglich die Lichtscheibe zu erkennen ist und die in Fahrtrichtung auf das Fahrzeugheck (11) gesehen eine im wesentlichen trapezförmige und in Richtung auf die Fahrzeugseitenfläche (12) gesehen eine im wesentlichen rechteckförmige Projektionsfläche zeigt.

Der Übergang der heckseitigen Fläche der Lichtscheibe (1, 2) zur seitlichen Fläche erfolgt in Form eines Bogens (13). Der obere Lichtscheibenteil (2) verläuft in vertikaler Richtung gesehen nach oben hin um einen spitzen Winkel (α) zurückspringend.

Die Heckleuchte ist als sogenannte Mehrkammerleuchte ausgebildet, wobei für jedes Signallicht eine separate Kammer zur Verfügung steht. Diese Kammern werden gebildet von einzelnen Reflektoren, die teilweise nach außen und zueinander abgekammert sind. Den einzelnen Reflektoren (3, 4, 5, 6, 7 und 8) sind einzelne Lichtscheibenabschnitte (14, 15, 16, 17, 18, 19) zugeordnet, welche auf der Innenseite mit optischen Mitteln versehen sind. Dabei sind den einzelnen Reflektoren und entsprechend den davor angeordneten Lichtscheibenabschnitten folgende Funktionen zugeteilt. Der Reflektor (3) ist für das Blinklicht, der Reflektor (4) für das Rückfahrlicht, der Reflektor (6) für das Bremslicht, der Reflektor (7) für das Schlußlicht und der Reflektor (8) für das Nebelschlußlicht bestimmt. Der Reflektor (5) hat keine optische Funktion, sondern lediglich eine stilistisch-dekorative Funktion. Dieser Reflektor hat lediglich die Aufgabe, das von außen auf ihn auftreffende Licht in der gleichen Art und Weise zu reflektieren, wie die übrigen Reflektoren, so daß der Lichtscheibenabschnitt (16) vor dem Reflektor (5) die gleiche Brillanz erhält wie die übrigen vor einem Reflektor angeordneten Lichtscheibenabschnitte.

Die Lichtscheibenabschnitte (15, 18 und 19) weisen eine nahezu planflächig verlaufende Oberfläche auf. Dieses ist wichtig, weil in den Lichtscheibenabschnitten (18, 19) die Rückstrahlertripel (20) und auf der Rückseite des Lichtscheibenabschnitts (15) lichtundurchlässige Streifen (21) aufgebracht sind. Die Rückstrahlertripel (20) sollten möglichst in einer senkrecht zur Fahrzeugmittelachse verlaufenden Ebene angebracht sein, weil sie damit die günstigste Rückstrahlerwirkung aufweisen. Die lichtundurchlässigen Streifen (21) werden im Prägeverfahren auf den Lichtscheibenabschnitt (15) aufgebracht. Dafür ist es günstig, wenn die streifenaufnehmenden Flächen möglichst in einer Planfläche liegen. Die die Streifen (21) aufnehmenden Flächen sind gegenüber ihren benachbarten Flächenabschnitten erhöht, so daß die Streifen zunächst in Form einer Folie aufgebracht werden und durch Prägen die Bereiche der Folie, die auf den erhöhten Flächen liegen, von den übrigen Flächen getrennt werden. Die Befestigung der lichtundurchlässigen Streifen (21) mit dem Lichtscheibenabschnitt (15) erfolgt durch einen Kleber, der auf Druck und/oder Wärme reagiert. Die Farbe der lichtundurchlässigen Streifen ist rot, so daß der farblose Lichtscheibenabschnitt (15) für das Rückfahrlicht nach außen hin weitestgehend rot erscheint und somit der Farbe der Lichtscheibenabschnitte (17, 18, 19) angepaßt ist. Damit erscheint der Lichtscheibenabschnitt für das Rückfahrlicht nicht mehr in einem krassen farblichen Unterschied zu dem Signalrot für das Brems-, Schluß- und Nebelschlußlicht. Die Streifen (21) sind mit einem Rahmen (22) untereinander verbunden, so daß sich ein lichtundurchlässiges Gitter ergibt.

Die die Rückstrahlwirkung erzeugenden Tripel (20) des Rückstrahlers sind zeilenförmig verlaufend angeordnet.

Dabei erstrecken sich diese Tripelzeilen über die gesamte Breite der Leuchte, und zwar über die Lichtscheibenabschnitte (17, 18, 19) hinweg. Die mit Tripeln (20) ausgestatteten Zeilen wechseln sich ab mit Zeilen, die aneinandergrenzende, vertikal verlaufende Zylinderlinsen (23) aufweisen. Diese Zylinderlinsen (23) streuen das auf sie auftreffende, durch den jeweiligen Reflektor parallelgerichtete Licht in der Horizontalen. Die Tripel (20) sind nur in den Lichtscheibenabschnitten (18) für das Schlußlicht und (19) für das Nebelschlußlicht als Rückstrahler wirkend ausgebildet. In allen übrigen Lichtscheibenabschnitten, wie der Lichtscheibenabschnitt (17) vor dem Bremslicht, in dem sich daran nach außen anschließenden Lichtscheibenabschnitt (24) und in dem sich seitlich an den Lichtscheibenabschnitt (15) anschließenden Lichtscheibenbereich (16) sind diese Tripel durch Aufrauhung der drei Reflexionsflächen lichttechnisch unwirksam gemacht, d. h., daß das von außen auf die Tripel (20) auffallende Fremdlicht nicht so reflektiert wird, daß es nahezu in die gleiche Richtung wieder zurückgeworfen wird, sondern daß es beim Auftreffen auf die Rückstrahlerflächen des Tripels durch ihre Unrauhigkeit gestreut wird. Die Anordnung der Tripel (20) in den Lichtscheibenabschnitten (16, 17 und 24) erfolgt aus stilistischen Gründen. Man will damit erreichen, daß die Lichtscheibe in diesen Abschnitten genauso strukturiert ist wie in den Lichtscheibenabschnitten (18, 19) für das Schlußlicht und Nebelschlußlicht.

Die Reflektoren (6) für das Bremslicht und (3) für das Blinklicht sind zur Außenseite der Leuchte hin weit bis in die Seitenfläche der Leuchte hinein geöffnet. Dieses wird durch die Linien (25 und 26) dargestellt. Das hat den Vorteil, daß sowohl das Bremslicht als auch das Blinklicht in einem großen, und zwar weit zur Fahrzeugseite hin geöffneten Winkel austritt.

Die sich an die Lichtscheibenabschnitte (14, 16 und 17) zur Fahrzeugaußenseite hin anschließenden Lichtscheibenabschnitte (24, 27 und 28) sind mit einem äquidistant zu ihnen verlaufenden, im stumpfen Winkel zurückspringenden Rand (29) des Gehäuses (9) abgedeckt, der zur besseren Lichtreflexion silberfarbig ausgeführt ist. Damit erhält die Lichtscheibe in diesen Bereichen die gleiche Brillanz wie in den Bereichen, die mit einem Reflektor hinterlegt sind. Um die Brillanz besser an die anderen Lichtscheibenabschnitte anzupassen, ist dieser zurückspringende Rand (29) an der Außenseite mit Prismen (30) versehen, die das von außen auftreffende Licht gestreut reflektieren.

Zwischen dem Teil (1) und dem Teil (2) der Lichtscheibe verläuft ein Steg (31), der einen Teil des Gehäuses (9) bildet. Dieser Steg (31) trennt einmal den Lichtscheibenabschnitt (14) des Blinklichts von dem Lichtscheibenabschnitt (15) des Rückfahrlichts und dem danebenliegenden Lichtscheibenabschnitt (16). Zum anderen bildet er aber auch zugleich eine Auflagefläche zur Befestigung der an ihn angrenzenden Lichtscheibenabschnitte.

Den Lichtscheibenabschnitten (17) für das Bremslicht, (18) für das Schlußlicht und (19) für das Nebelschlußlicht ist eine Optikscheibe (32) vorgeschaltet, die mit horizontal verlaufenden Zylinderlinsen (33) besetzt ist. Diese zeilenförmig und aneinandergrenzend verlaufenden Zylinderlinsen (33) sammeln das parallelgerichtet auf sie auftreffende Licht derart, daß es gebündelt zwischen die zeilenförmig verlaufenden Tripel hindurchfällt. Diese Zylinderlinsen (33) sorgen auch gleichzeitig für eine ausreichende Vertikalstreuung des Bremslichts, Schlußlichts und Bremsschlußlichts.

## Patentansprüche

1. In den Übergang von der Heckfläche (11) zur Seitenfläche (12) eines Fahrzeugs einbaubare Heckleuchte
- mit einer Lichtscheibe (1, 2), die in Anbaulage in Fahrtrichtung auf das Fahrzeugheck gesehen eine im wesentlichen trapezförmige und in Richtung auf die Fahrzeugseitenfläche gesehen eine im wesentlichen rechteckförmige Projektionsfläche zeigt,
- die Lichtscheibe (1, 2) geht in einem Bogen (13) von der Heckfläche (11) in die Seitenfläche (12) des Fahrzeugs über,
- das Leuchtengehäuse (9) weist jeweils einen Reflektor für das Blinklicht (3), Bremslicht (6), Schlußlicht (7), Nebelschlußlicht (8) und Rückfahrlicht (4) auf, wobei das Blinklicht aus dem oberen Abschnitt (14) und das Bremslicht, Schlußlicht und Nebelschlußlicht aus nebeneinanderliegenden, gleich hohen Abschnitten (17, 18, 19) im unteren Bereich der Lichtscheibe austritt,
- die Lichtscheibenabschnitte für das Schlußlicht (18) und das Nebelschlußlicht (19) verlaufen weitestgehend in einer Planfläche, während der Lichtscheibenabschnitt (17) für das Bremslicht zumindest teilweise in dem bogenförmig verlaufenden Übergang (13) von der Heckfläche (11) zur Seitenfläche (12) liegt,
- der Lichtscheibenabschnitt (18) für das Schlußlicht weist einen Rückstrahler auf, der aus das Fremdlicht reflektierenden Tripeln (20) besteht,
- die Tripel (20) sind in mehreren Zeilen angeordnet, die sich mit Zeilen abwechseln, welche mit vertikal verlaufenden Zylinderlinsen (23) besetzt sind,
- die Lichtscheibe ist in den sich in die Seitenwandung (12) des Fahrzeugs erstreckenden Bereichen (24, 27, 28) von einem äquidistant zu ihr verlaufenden, im stumpfen Winkel zurückspringenden Rand (29) des Gehäuses (9) abgedeckt, der lichtreflektierend ausgebildet ist,
gekennzeichnet durch folgende Merkmale:
a) der Lichtscheibenabschnitt (14) für das Blinklicht erstreckt sich über die gesamte Breite der Leuchte,
b) der Reflektor (3) für das Blinklicht erstreckt sich über die gesamte Breite der heckseitigen Fläche des Lichtscheibenabschnitts für das Blinklicht und reicht weit in den seitlichen Bereich (28) dieses Lichtscheibenabschnitts (14) hinein,
c) die im unteren Bereich der Lichtscheibe eingebrachten, zeilenförmig angeordneten Rückstrahlertripel (20) und die dazwischen liegenden, mit Zylinderlinsen (23) besetzten Zeilen verlaufen von Rand zu Rand über die gesamte Breite der Lichtscheibe,
d) die Rückstrahlertripel (20) sind in den Lichtscheibenabschnitten (24), die seitlich über die Reflektoren für Schluß- und Nebelschlußlicht hinausgehen, lichttechnisch unwirksam gemacht,
e) zwischen dem oberen, das Blinklicht erzeugenden Bereich und dem unteren, das Brems-, Schluß- und Nebelschlußlicht erzeugenden Bereich weist die Leuchte einen mittleren, das Rückfahrlicht erzeugenden Bereich auf,
f) der Reflektor (4) für das Rückfahrlicht erstreckt sich von dem seitlichen Innenrand der Leuchte bis zum Beginn des bogenförmigen Übergangs (13) der Lichtscheibe von der Heckfläche zur Seitenfläche,
g) der vor dem Reflektor (4) für das Rückfahrlicht liegende und in der Größe der Lichtaustrittsgröße des Reflektors entsprechende Lichtscheibenabschnitt (15) ist mit zeilenförmig angeordneten, lichtundurchlässigen Streifen (21) versehen,
h) die zwischen den lichtundurchlässigen Streifen (21) liegenden Zeilen sind mit vertikal verlaufenden Zylinderlinsen (23) besetzt,
i) die lichtundurchlässigen Streifen (21) sind in der Farbe der Lichtscheibenabschnitte (17, 18, 19) für das Brems-, Schluß- und Nebelschlußlicht ausgeführt,
k) der Lichtscheibenabschnitt (16), der seitlich neben dem für das Rückfahrlicht liegt, ist in der optischen Struktur entsprechend dem darunterliegenden Lichtscheibenabschnitt (17) für das Bremslicht ausgeführt,
l) der seitlich dem Lichtscheibenabschnitt (15) für das Rückfahrlicht und oberhalb dem für das Bremslicht liegende Lichtscheibenabschnitt (16) ist mit einem seitlich abgekammerten Reflektor (5) hinterlegt.

2. Heckleuchte für Fahrzeuge nach Anspruch 1, dadurch gekennzeichnet, daß der Lichtscheibenabschnitt (14) für das Blinklicht nach oben hin um einen spitzen Winkel (α) zurücksprengend verläuft.

3. Heckleuchte für Fahrzeuge nach Anspruch 1, dadurch gekennzeichnet, daß die lichtundurchlässigen Streifen (21) im Lichtscheibenabschnitt (15) für das Rückfahrlicht aufgeklebt oder im Prägeverfahren durch Druck und/oder Wärme aufgesiegelt sind.

4. Heckleuchte für Fahrzeuge nach Anspruch 1, dadurch gekennzeichnet, daß der Lichtscheibenabschnitt (15) für das Blinklicht ein separates Teil ist und die übrigen Lichtscheibenabschnitte (15, 16, 17, 18, 19) zu einem einzigen Teil im Spritzverfahren zusammengefügt sind und daß zwischen diesen beiden Lichtscheibenteilen (1, 2) ein Steg (31) verläuft, der an das von den Reflektoren gebildete Gehäuse (9) angeformt ist.

5. Heckleuchte für Fahrzeuge nach Anspruch 1, dadurch gekennzeichnet, daß zumindest den Bereichen der Lichtscheibenabschnitte, die von dem von den Reflektoren (6, 7, 8) reflektierten Licht beaufschlagt werden und mit Rückstrahlertripeln (20) besetzt sind, eine Optikscheibe (32) vorgeschaltet ist, welche mit zeilenförmig angeordneten, aneinandergrenzenden Zylinderlinsen (33) besetzt ist.

6. Heckleuchte für Fahrzeuge nach Anspruch 5, dadurch gekennzeichnet, daß die Optikscheibe (32) so auf das von den Reflektoren gebildete Gehäuse (9) aufgesetzt ist, daß ihre Außenfläche stufenlos in die Außenfläche des zurückspringenden Randes (29) des Gehäuses (9) übergeht.

7. Heckleuchte für Fahrzeuge nach einem der vorstehenden Ansprüche, dadurch gekennzeichnet, daß die Außenfläche des zurückspringenden Randes (29) mit Rippen (30) oder Rinnen versehen ist, die das hierauf auftreffende Licht gestreut reflektieren.

8. Heckleuchte für Fahrzeuge nach einem der vorstehenden Ansprüche, dadurch gekennzeichnet, daß die Tripel (20) in den Lichtscheibenabschnitten, die nicht als Schluß- und Nebelschlußlicht dienen, durch Aufrauhung ihrer Reflexionsflächen lichttechnisch unwirksam gemacht sind.

## Claims

1. A rear lamp, which can be installed in the transition from the rear surface (11) to the side surface (12) of a vehicle,
- with a lamp cover (1,2), which in its installed position exhibits a substantially trapezoidal projected area viewed towards the rear of the vehicle in the direction of travel and exhibits a substantially rectangular projected area viewed in a direction towards the side surface of the vehicle,
- the lamp cover (1,2) extends in an arc (13) from the rear surface (11) into the side surface (12) of the vehicle,
- the lamp housing (9) has a reflector in each case for the flashing indicator light (3), the brake light (6), the rear light (7), the rear fog light (8) and the reversing light (4), wherein the flashing indicator light emerges from the upper section (14), and the brake light, rear light and rear fog light emerge from sections (17, 18, 19) at the same height and disposed side by side in the lower region of the lamp cover,
- the lamp cover sections for the rear light (18) and the rear fog light (19) run substantially in one plane, whilst the lamp cover section (17) for the brake light is at least partially situated in the arcuately extending transition (13) from the rear surface (11) to the side surface (12),
- the lamp cover section (18) for the rear light comprises a rear reflector which consists of triple prisms (20) which reflect extraneous light,
- the triple prisms (20) are arranged in a plurality of rows which alternate with rows which are occupied by vertically extending cylindrical lenses (23),
- in regions (24, 27, 28) extending into the sidewall (12) of the vehicle the lamp cover is covered by an edge (29) of the housing (9) extending equidistantly to the lamp cover and set back at an obtuse angle, which is of light-reflecting construction,
characterised by the following features:
a) the lamp cover section (14) for the flashing indicator light extends over the entire width of the lamp,
b) the reflector (3) for the flashing indicator light extends over the entire width of the rear face of the lamp cover section for the flashing indicator light and extends far into the side region (28) of this lamp cover section (14),
c) the rear reflector triple prisms (20) which are provided in the lower region of the lamp cover and arranged in rows, and the rows situated between these and occupied by cylindrical lenses (23) run from edge to edge over the entire width of the lamp cover,
d) the rear reflector triple prisms (20) are made optically ineffective in the lamp cover sections (24) which project laterally beyond the reflectors for the rear light and the rear fog light,
e) the lamp has a central region which produces the reversing light between the upper region which produces the flashing indicator light and the lower region which produces the brake-, rear- and rear fog light,
f) the reflector (4) for the reversing light extends from the inner side edge of the lamp as far as the start of the arcuate transition (13) of the lamp cover from the rear surface to the side surface,
g) the lamp cover section (15) situated in front of the reflector (4) for the reversing light and corresponding in size to the light emergence size of the reflector is provided with strips (21) opaque to light and arranged in rows,
h) the rows situated between the opaque strips (21) are occupied by vertically extending cylindrical lenses (23),
j) the opaque strips (21) are constructed in the colour of the lamp cover sections (17, 18, 19) for the brake-, rear- and rear fog lights,
k) the lamp cover section (16) which is situated at the side of and close to that for the reversing light is constructed with an optical structure corresponding to the lamp cover section (17) for the brake light situated below it,
l) the lamp cover section (16) situated at the side of the lamp cover section (15) for the reversing light and above that for the brake light is backed by a laterally chambered-off reflector (5).

2. A rear lamp for vehicles according to claim 1, characterised in that the lamp cover section (14) for the flashing indicator light runs upwards set back at an acute angle (α).

3. A rear lamp according to claim 1, characterised in that the opaque strips (21) in the lamp cover section (15) for the reversing light are adhesively bonded or are sealed by means of pressure and/or heat in the stamping process.

4. A rear lamp for vehicles according to claim 1, characterised in that the lamp cover section (15) for the flashing indicator light is a separate part and the remaining lamp cover sections (15, 16, 17, 18, 19) are joined together to form a single part in the injection-moulding process, and that a crosspiece (31), which is integrally formed on the housing (9) formed from the reflectors, runs between these two lamp cover parts (1, 2).

5. A rear lamp for vehicles according to claim 1, characterised in that a lens plate (32) is disposed at least in front of the regions of the lamp cover sections on which the light reflected from the reflectors (6, 7, 8) impinges and which are occupied by rear reflector triple prisms (20), which lens plate is occupied by cylindrical lenses (33) adjoining each other and arranged in rows.

6. A rear lamp for vehicles according to claim 5, characterised in that the lens plate (32) is placed on the housing (9) formed from the reflectors so that its external face extends without a step into the external face of the set-back edge (29) of the housing (9).

7. A rear lamp for vehicles according to any one of the preceding claims, characterised in that the external face of the set-back edge (29) is provided with ribs (30) or channels which effect scattered reflection of the light incident thereon.

8. A rear lamp for vehicles according to any one of the preceding claims, characterised in that the triple prisms (20) in the lamp cover sections which do not serve as the rear- and rear fog lights are made optically ineffective by roughening their reflecting faces.

## Revendications

1. Feu arrière pouvant être monté dans le passage de la face arrière (11) à la face latérale (12) d'un véhicule,
- comprenant une plaque d'éclairage (1, 2) qui, dans la position de montage, présente une surface de projection essentiellement trapézoïdale, vue dans le sens de la marche sur l'arrière du véhicule et essentiellement rectangulaire, vue dans la direction des faces latérales du véhicule,
- dans lequel la plaque d'éclairage (1, 2) se transforme suivant un arc (13) depuis la face arrière (11) en la face latérale (12) du véhicule,
- dans lequel le boîtier de feu (9) comporte respectivement un réflecteur pour le clignotant (3), le feu stop (6), le feu arrière (7), le feu brouillard arrière (8) et le feu de marche arrière (4), le clignotant émergeant de la section supérieure (14), le feu stop, le feu arrière et le feu brouillard arrière émergeant de sections (17, 18, 19) de même hauteur, agencées les unes à côté des autres dans la région inférieure de la plaque d'éclairage,
- dans lequel les sections de plaque d'éclairage pour le feu arrière (18) et le feu brouillard arrière (19) s'étendent pratiquement dans une face plane tandis que la section de plaque d'éclairage (17) pour le feu stop se situe au moins partiellement dans le passage (13) en forme d'arc qui s'étend de la face arrière (11) à la face latérale (12),
- dans lequel la section de plaque d'éclairage (18) pour le feu arrière présente un catadioptre composé de prismes triples (20) qui réfléchissent la lumière extérieure,
- dans lequel les prismes triples (20) sont agencés dans plusieurs rangées qui alternent avec des rangées qui sont occupées par des lentilles cylindriques (23) verticales,
- dans lequel, dans les zones (24, 27, 28) s'étendant dans la paroi latérale (12) du véhicule, la plaque d'éclairage est recouverte par un bord (29) du boîtier (9), situé en retrait sur un angle obtus et équidistant à elle-même, bord qui réfléchit la lumière,
caractérisé par les caractéristiques suivantes:
a) la section de plaque d'éclairage (14) pour le clignotant s'étend sur la largeur totale du feu,
b) le réflecteur (3) pour le clignotant s'étend sur la largeur totale de la face arrière de la section de plaque d'éclairage pour le clignotant et profondément dans la zone latérale (28) de cette section de plaque d'éclairage (14),
c) les prismes triples (20) de catadioptre agencés en rangées dans la zone inférieure de la plaque d'éclairage, et les rangées situées entre eux et occupées par les lentilles cylindriques (23) s'étendent de bord à bord sur la largeur totale de la plaque d'éclairage,
d) les prismes triples (20) de catadioptre sont rendus inactifs du point de vue de l'éclairage dans les sections de plaque d'éclairage (24) qui dépassent latéralement les réflecteurs pour le feu arrière et le feu brouillard arrière,
e) entre la zone supérieure produisant le feu du clignotant et la zone inférieure produisant le feu stop, le feu arrière et le feu brouillard arrière, le feu présente une zone médiane qui produit le feu de marche arrière,
f) le réflecteur (4) pour le feu de marche arrière s'étend depuis le bord intérieur latéral du feu jusqu'au début du passage en forme d'arc (13) de la plaque d'éclairage, de la face arrière jusqu'à la face latérale,
g) la section de plaque d'éclairage (15) située devant le réflecteur (4) pour le feu de marche arrière et dont la taille correspond à la grandeur de l'émergence de la lumière du réflecteur est pourvue de bandes (21) opaques agencées en rangées,
h) les rangées situées entre les bandes opaques (21) sont occupées par des lentilles cylindriques (23) verticales,
j) les bandes opaques (21) sont réalisées dans la couleur des sections de plaque d'éclairage (17, 18, 19) pour le feu stop, le feu arrière et le feu brouillard arrière,
k) la section de plaque d'éclairage (16) qui est située latéralement à côté de celle pour le feu de marche arrière est réalisée du point de vue de la structure optique de manière correspondante à la section de plaque d'éclairage (17) pour le feu stop, qui est située en-dessous,
l) la section de plaque d'éclairage (16), située latéralement à côté de la section de plaque d'éclairage (15) pour le feu de marche arrière et au-dessus de celle pour le feu stop, est doublée postérieurement par un réflecteur (5) se trouvant isolé latéralement dans une chambre.

2. Feu arrière pour véhicule selon la revendication 1, caractérisé en ce que la section de plaque d'éclairage (14) pour le clignotant s'étend vers le haut en retrait sous un angle aigu (α).

3. Feu arrière pour véhicule selon la revendication 1, caractérisé en ce que les bandes opaques (21) sont collées ou scellées par impression sous l'action de pression et/ou de chaleur dans la section de plaque d'éclairage (15) pour le feu de marche arrière.

4. Feu arrière pour véhicule selon la revendication 1, caractérisé en ce que la section de plaque d'éclairage (15) pour le clignotant est une pièce séparée et en ce que les autres sections de plaque d'éclairage (15, 16, 17, 18, 19) sont assemblées en une pièce unique par injection et en ce qu'entre ces deux parties de plaque d'éclairage (1, 2) s'étend un voile (31) qui est formé sur le boîtier constitué par les réflecteurs.

5. Feu arrière pour véhicule selon la revendication 1, caractérisé en ce qu'une plaque optique (32) est montée au moins devant les régions des sections de plaque d'éclairage qui sont sollicitées par la lumière réfléchie par les réflecteurs (6, 7, 8) et occupées par des prismes triples de catadioptre (20), ladite plaque d'éclairage étant occupée par des lentilles cylindriques (33) adjacentes les unes aux autres et agencées en rangées.

6. Feu arrière pour véhicule selon la revendication 5, caractérisé en ce que la plaque optique (32) est placée de telle sorte sur le boîtier (9) constitué par les réflecteurs que sa face extérieure se transforme de manière continue en la face extérieure du bord (29) en retrait du boîtier (9).

7. Feu arrière pour véhicule selon l'une des revendications précédentes, caractérisé en ce que la face extérieure du bord (29) en retrait est pourvue de nervures (30) ou de rainures qui dispersent la lumière qui s'y réfléchit.

8. Feu arrière pour véhicule selon l'une des revendications précédentes, caractérisé en ce que les prismes triples (20) sont désactivés du point de vue de l'éclairage dans les sections de plaque d'éclairage, qui ne servent pas de feu arrière et de feu brouillard arrière, en rendant rugueuses leurs surfaces de réflexion.
